Europäisches Patentamt

(19) European Patent Office  (11) Publication number: **0 091 729**

Office européen des brevets  **B1**

(12) **EUROPEAN PATENT SPECIFICATION**

(45) Date of publication of patent specification: **23.07.86**  (51) Int. Cl.⁴: **H 04 N 5/232, H 04 N 5/235**

(21) Application number: **83301069.7**

(22) Date of filing: **28.02.83**

(54) **Continuous depth of focus control.**

(30) Priority: **02.04.82 US 364719**

(43) Date of publication of application:
**19.10.83 Bulletin 83/42**

(45) Publication of the grant of the patent:
**23.07.86 Bulletin 86/30**

(84) Designated Contracting States:
**CH DE FR GB LI NL**

(56) References cited:
**US-A-3 555 181**
**US-A-4 174 526**

**PATENTS ABSTRACTS OF JAPAN, vol. 5, no.**
**66(E-55) (738), 2nd May 1981**

(73) Proprietor: **AMPEX CORPORATION**
**401 Broadway M.S. 3-35**
**Redwood City California 94063-3199 (US)**

(72) Inventor: **Brill, Gerow D.**
**622 Marlin Court**
**Redwood City California (US)**

(74) Representative: **Horton, Andrew Robert Grant**
**et al**
**BOULT, WADE & TENNANT 27 Furnival Street**
**London, EC4A 1PQ (GB)**

Courier Press, Leamington Spa, England.

## Description

### Background and Summary of Invention

The present invention relates to television cameras and in particular to the continuous depth of focus control of a television camera.

The generation and sales of video related advertising is a major industry within the field of television and one which generates millions of dollars for many companies whose products and services relate to the television and advertising industries. Thus, for example, suppliers of television recorders, cameras, switchers, editing systems, etc. are continually striving to provide new and better apparatus, techniques, aids, etc., for generating television advertising in the form of product commercials. Advertisers and television producers alike welcome any improvement in apparatus or techniques which decreases the time that it takes to produce a commercial, which simplifies the apparatus or procedure required to produce the commercial, or which enhances the dramatic affects of the commercial in its portrayal of a product to a viewer.

There are situations, particularly in television commercial production, when it is desirable to focus the viewer's attention on a person or product which is under discussion. Thus, the person or product may be kept in focus while the background, or a second object, may be kept out of focus. At some point during the commercial presentation, it is desirable to bring the background or the second object into focus while maintaining the previously focussed person or product in focus.

The present invention particularly concerns a method of controlling a television camera which includes a video processor of variable gain and an automatic iris control which responds to variation in an output video level from the processor to adjust an iris in the camera in such manner as to maintain the output video level constant. Such a camera is disclosed in US—A—4174526 which describes a system providing both automatic control and manual control wherein the explicit adjustment of the iris provides, at low intensities of light, some variation of the gain of the processor. The arrangement described in US—A—4174536 is intended to provide direct control only of the iris so as to facilitate compatibility of automatic and manual control and to avoid discontinuities in a control characteristic in a region between low and high light intensities.

The present invention is characterised in that, for adjusting the depth of focus of the camera, the gain of the *processor* is adjusted by means of a respective control, whereby the automatic iris control varies the iris setting to adjust the depth of focus while maintaining the output video level constant. Thus the invention permits the operator to select a depth of field while retaining the simultaneous control of the output video level.

One advantage of the invention is the facility of performing change of depth of focus without changing lighting level or using special editing procedures.

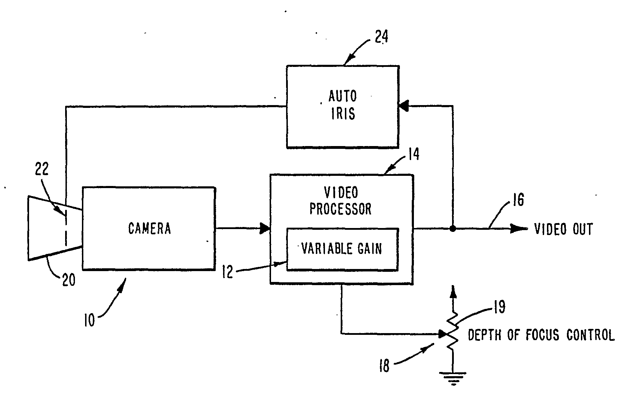

Referring to the single Figure 1, a television camera 10 supplies a video signal to a variable gain control 12 which, in turn, forms part of the video processing circuitry 14 of the camera system. The video processing circuitry 14 supplies an output video signal on an output 16.

A depth of focus control 18 is formed of a potentiometer 19 coupled from ground to a given voltage. The focus control 18 is coupled to the variable gain means 12, and provides to the latter a range of DC voltages which, in turn, continuously varies the gain of the video processing circuitry accordingly. As generally known, varying the gain of the video processing circuitry 14 varies in turn the output video signal level on output 16.

The camera 10 further includes a lens 20 with a continuously adjustable iris 22. An automatic iris control 24 provides for adjusting the aperture of the iris 22 in response to the level of the video signal on the output 16.

By way of example only, a television camera system which includes an automatic iris control and a variable gain control such as depicted in the single Figure, is the BCC-20 broadcast color camera system manufactured by Ampex Corporation, Redwood City, California, and described in the Preliminary Information Manual issued September, 1981. The matter contained in that Manual is herein incorporated by reference.

By way of further explanation, a well known physical phenomenon of lenses is that they change their depth of focus with a corresponding change of the iris aperture. For example, the depth of focus may be as short as a few inches at f/1.4 and may be several feet at f/8.

In addition, in a television camera, increasing or decreasing the ambient light level being recorded by the camera causes a corresponding increase or decrease in the output video level. In sophisticated television cameras employing an automatic iris control, a change in the output video level is detected by the automatic iris control which adjusts the iris correspondingly, to return the output video level to the preset value automatically.

Accordingly, to provide a continuous depth of focus change for such a camera the video signal gain may be varied by varying the 'depth of focus' control 18. The automatic iris control 24 detects the resulting variation in the output video level, and instructs the iris 22 to open or close accordingly. An increase in gain causes the iris to close, whereas a decrease in gain causes the iris to open. In turn, closing the iris 22 increases the depth of focus of the lens, and opening the iris decreases the depth of focus.

As previously mentioned by way of example, in television commercial production, the first object which the camera is focussed on may be a product under discussion wherein the background is kept out of focus. At some point in the commercial, it is desirable to include both the product and the background in focus. This is accomplished by adjusting the depth of focus control 18, to vary the gain accordingly via the variable gain control 12. This causes a change in the output video level on output 16 which, in turn, is detected by the automatic iris control 24. The latter control then varies the iris 22 accordingly which, in turn, changes the depth of focus to bring the background into focus along with the product.

For example, the product nearest the camera is in focus, with the background out of focus. When the background also is to be brought into focus, the depth of focus control 18 is adjusted to increase the gain. The increase in gain raises the output video level, which causes the automatic iris control 24 to close the iris 22. This in turn increases the depth of focus to also bring the background into focus.

Alternatively, the gain may be decreased to provide a decreased output video level in response to which the iris is opened to decrease the depth of focus so as for example to keep one selected object in focus and put a background or foreground out of focus.

## Claims

1. A method of controlling a television camera (10) which includes a video processor (14) of variable gain and an automatic iris control (24) which responds to variation in an output video level from the processor to adjust an iris (22) in the camera in such manner as to maintain the output video level constant, characterised in that, for adjusting the depth of focus of the camera, the gain of the processor is adjusted by means of a respective control (18), whereby the automatic iris control varies the iris setting to adjust the depth of focus while maintaining the output video level constant.

2. A method according to claim 1 in which the said control (18) is adjusted in a sense to increase the output video level, whereupon the automatic iris control closes the iris to maintain the original output video level to increase the depth of focus of the camera.

3. A method according to claim 1 in which the said control (18) is adjusted in a sense to decrease the output video level, whereupon the automatic iris control opens the iris to maintain the original output video level and to decrease the depth of focus of the camera.

## Patentansprüche

1. Verfahren zum Steuern einer Fernsehkamera (10) mit einem eine veränderliche Verstärkung aufweisenden Videoprozessor (14) und mit einer automatischen Blendensteuerung (24), welche zum Einstellen der Blende (22) in der Kamera auf Änderungen eines vom Prozessor ausgehenden Videopegels anspricht, derart, dass der Videoausgangspegel konstant gehalten wird, dadurch gekennzeichnet, dass zum Einstellen der Kamera-Fokustiefe die Prozessorverstärkung durch eine entsprechende Steuerung (18) eingestellt wird, mit welcher die automatische Blendensteuerung die Blendeneinstellung zum Justieren der Fokustiefe verändert, während der Videoausgangspegel konstant gehalten wird.

2. Verfahren nach Anspruch 1, dadurch gekennzeichnet, dass die Steuerung (18) im Sinne einer Erhöhung des Videoausgangspegels justiert wird, worauf die automatische Blendensteuerung die Blende schliesst, um den ursprünglichen Videoausgangspegel zum Erhöhen der Kamera-Fokustiefe aufrecht zu erhalten.

3. Verfahren nach Anspruch 1, dadurch gekennzeichnet, dass die Steuerung (18) im Sinne einer Senkung des Videoausgangspegels justiert wird, worauf die automatische Blendensteuerung die Blende öffnet, um den urspünglichen Videoausgangspegel zum Senken der Kamera-Fokustiefe aufrecht zu erhalten.

## Revendications

1. Méthode de commande d'une caméra de télévision (10) qui comprend un processeur vidéo (14) à gain variable et une commande automatique (24) d'iris qui répond aux variations d'un niveau vidéo de sortie du processeur pour régler un iris (22) dans la caméra de manière à maintenir constant le niveau vidéo de sortie, caractérisée en ce que, pour le réglage de la profondeur de foyer de la caméra, le gain du processeur est réglé au moyen d'une commande respective (18), la commande d'iris automatique modifiant le réglage de l'iris pour régler la profondeur de foyer tout en maintenant constant le niveau vidéo de sortie.

2. Méthode selon la revendication 1 caractérisée en ce que ladite commande (18) est réglée de manière à augmenter le niveau vidéo de sortie, après quoi la commande d'iris automatique ferme l'iris pour maintenir le niveau vidéo de sortie originel afin d'augmenter la profondeur de foyer de la caméra.

3. Méthode selon la revendication 1 caractérisée en ce que ladite commande (18) est réglée de manière à réduire le niveau vidéo de sortie, après quoi la commande d'iris automatique ouvre l'iris pour maintenir le niveau vidéo de sortie originel afin de réduire la profondeur de foyer de la caméra.